# FASCICULE DE BREVET EUROPEEN

(11) **EP 1 408 385 B1**
(45) Date de publication et mention de la délivrance du brevet: **14.12.2005**
(21) Numéro de dépôt: 03292435.9
(22) Date de dépôt: 02.10.2003
(51) Int. Cl.: G05B 17/02

(54) **Procédé de commande d'un système dynamique, utilisant un modèle de logique floue d'au moins une fonction de transfert inverse de ce système**
Verfahren zur Steuerung eines dynamischen Systems mit Hilfe eines Fuzzy-Logic-Modells wenigstens einer inversen Übertragungsfunktion des Systems
Method for controlling a dynamic system, using a fuzzy logic model of at least one inverse transfer function of the system

(30) Priorité: 11.10.2002 FR 0212637
(43) Date de publication de la demande: 14.04.2004
(73) Titulaire: STMicroelectronics S.A., 92120 Montrouge (FR)
(72) Inventeur: Le Van Suu, Maurice, 77176 Savigny-Le-Temple (FR)
(74) Mandataire: Bentz, Jean-Paul

(56) Documents cités:
- EP-A- 1 234 964

## Description

L'invention concerne, de façon générale, les techniques de commande et de régulation.

Plus précisément, l'invention concerne un procédé pour commander, au cours d'une phase de régulation et en fonction d'un signal de consigne, un système dynamique physique appartenant à un type prédéterminé, soumis en fonctionnement à l'influence d'une pluralité de grandeurs physiques représentées par des paramètres d'entrée, et adoptant un comportement défini par au moins un premier paramètre physique de sortie astreint à prendre une valeur représentée par le signal de consigne, ce premier paramètre de sortie étant au moins lié à un premier des paramètres d'entrée par une première fonction de transfert de ce système.

De nombreux procédés répondant à cette définition sont connus à ce jour, et sont largement utilisés dans de nombreux secteurs de l'industrie, notamment pour commander des dispositifs électriques.

Une technique classique consiste à élaborer un signal d'erreur constitué par la différence entre le signal de consigne et une mesure du premier paramètre de sortie, et à commander la première grandeur d'entrée dans un sens propre à annuler le signal d'erreur.

Cette technique s'avère cependant difficilement praticable dans le cas où le premier paramètre de sortie ne peut être mesuré que par la mise en oeuvre de moyens complexes et / ou coûteux.

La demande de brevet européen EP-A-1 234 964 décrit une technique d'asservissement dans laquelle une fonction inverse de la fonction de transfert est mise en oeuvre.

Une autre technique bien connue consiste à caractériser le comportement adopté par le système en réponse à différentes variations des différents paramètres d'entrée, à mesurer un ou plusieurs paramètres d'entrée du système, et à prévoir l'état adopté par ce dernier au moyen d'un filtrage adaptatif, tel qu'un filtrage de Kalman.

Si cette autre technique offre une efficacité telle qu'elle est applicable à des systèmes très complexes, elle présente en revanche le grave inconvénient d'exiger des moyens de calcul très importants.

Dans ce contexte, la présente invention a pour but de proposer un procédé de commande exempt des défauts précités.

A cette fin, le procédé de l'invention, par ailleurs conforme à la définition générique qu'en donne le préambule ci-dessus, est essentiellement caractérisé en ce qu'il comprend une phase de caractérisation, préalable à la phase de régulation, et dans laquelle au moins une première fonction de transfert inverse, liant le premier paramètre d'entrée au premier paramètre de sortie est déterminée expérimentalement, et une phase de modélisation, qui est postérieure à la phase de caractérisation et préalable à la phase de régulation, et dans laquelle la première fonction de transfert inverse est traduite au moyen d'un modèle de logique floue sous forme d'un premier ensemble de domaines de valeurs du premier paramètre de sortie, à chacun desquels est affectée une valeur spécifique du premier paramètre d'entrée, et en ce que la phase de régulation est mise en oeuvre en déterminant une appartenance du signal de consigne à l'un des domaines de valeurs du premier ensemble, en déduisant de cette appartenance et du modèle de logique floue une valeur estimée du premier paramètre d'entrée correspondant à l'égalité recherchée entre le premier paramètre de sortie et le signal de consigne, en produisant une valeur mesurée du premier paramètre d'entrée, et en régulant le premier paramètre d'entrée en fonction d'une différence entre la valeur estimée et la valeur mesurée de ce premier paramètre d'entrée.

Dans le cas où le premier paramètre de sortie est également lié à au moins un deuxième des paramètres d'entrée par une deuxième fonction de transfert du système, le procédé de l'invention peut également prévoir qu'au moins une deuxième fonction de transfert inverse, liant le deuxième paramètre d'entrée au premier paramètre de sortie, soit déterminée expérimentalement au cours de la phase de caractérisation, que la deuxième fonction de transfert inverse au moins soit traduite, au cours de la phase de modélisation, au moyen du modèle de logique floue, sous forme d'un deuxième ensemble de domaines de valeurs du premier paramètre de sortie, à chacun desquels est affectée une valeur spécifique du deuxième paramètre d'entrée, et que la phase de régulation soit mise en oeuvre en déterminant une appartenance du signal de consigne à l'un des domaines de valeurs du deuxième ensemble, en déduisant de cette appartenance et du modèle de logique floue une valeur estimée du deuxième paramètre d'entrée correspondant à l'égalité recherchée entre le premier paramètre de sortie et le signal de consigne, en produisant une valeur mesurée du deuxième paramètre d'entrée, et en régulant le premier paramètre d'entrée en fonction d'une différence entre la valeur estimée et la valeur mesurée du deuxième paramètre d'entrée.

Le procédé est notamment utilisable dans le cas où le système physique est un dispositif consommateur d'énergie électrique alimenté par une tension d'alimentation présentant une valeur nominale ou efficace au moins sensiblement constante, et où le premier paramètre d'entrée représente un courant d'alimentation de ce dispositif.

Dans ce cas, le courant d'alimentation du dispositif électrique est par exemple régulé en valeur moyenne par modulation cyclique.

Le deuxième paramètre d'entrée peut alors typiquement représenter la tension d'alimentation du dispositif électrique.

Dans le cas où le système physique est constitué par un moteur électrique, le premier paramètre de sortie est par exemple constitué par la vitesse de rotation de ce moteur.

Le procédé peut en outre comprendre une procédure de sécurité, cette procédure incluant une comparaison d'une mesure du courant d'alimentation à un seuil prédéterminé, et une interruption de l'alimentation du dispositif électrique en cas de dépassement du seuil par la mesure du courant d'alimentation.

Le procédé de l'invention peut aussi comprendre, de façon concrète, une phase d'intégration, intermédiaire entre les phases de modélisation et de régulation, et dans laquelle la première fonction de transfert inverse, traduite sous la forme du premier ensemble de domaines de valeurs, est mémorisée dans un circuit intégré doté de moyens dédiés de calcul en logique floue.

Dans ce cas, la deuxième fonction de transfert inverse, traduite sous la forme du deuxième ensemble de domaines de valeurs, peut aussi être mémorisée, dans le même circuit intégré, au cours de cette phase d'intégration.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma d'une installation électrique mettant en oeuvre le procédé de l'invention ;
- la figure 2 est un schéma représentant symboliquement la transformation d'une fonction de transfert inverse du système à commander suivant un signal de consigne en un ensemble de fonctions ou domaines d'appartenance de ce signal de consigne ; et
- la figure 3 est un schéma opérationnel et symbolique de la mise en oeuvre du procédé.

Comme annoncé précédemment, l'invention concerne un procédé pour commander un système dynamique physique SYS appartenant à un type prédéterminé et par exemple constitué, dans l'exemple illustré à titre d'application privilégiée, par un modèle déterminé de moteur électrique MOT.

Ce procédé est conçu pour permettre de commander ce système, au cours d'une phase de régulation qui s'inscrit dans le temps lors de l'utilisation concrète de ce système, et en fonction d'un signal de consigne.

Par exemple, le système que constitue le moteur MOT est commandé en fonction d'un signal de consigne Kω délivré par un potentiomètre POT, et représentant, dans l'exemple illustré, une valeur souhaitée de vitesse de rotation du moteur.

Le système SYS, constitué en l'occurrence par ce moteur MOT, est soumis en fonctionnement à l'influence d'une pluralité de grandeurs physiques telles que le couple Cpl résistant qu'il doit vaincre, le courant 1 qui le traverse, et sa tension U d'alimentation, ces grandeurs pouvant ne pas être directement accessibles, mais étant en toute hypothèse représentées par des paramètres d'entrée connus ou inconnus a priori, tels qu'un signal de courant S(I) et un signal de tension S(U) respectivement liés au courant et à la tension d'alimentation I et U.

Sous l'effet de ces grandeurs, le système adopte un comportement qui se manifeste par au moins un premier paramètre physique de sortie, en l'occurrence par sa vitesse de rotation ω, le procédé de l'invention ayant précisément pour finalité de contraindre ce paramètre de sortie à prendre une valeur ωk représentée par le signal de consigne Kω.

Le système SYS étant prédéterminé, son comportement peut être étudié en amont de toute utilisation concrète.

Par exemple, dans le cas où ce système SYS est constitué par un moteur MOT, alimenté par une source de tension de valeur instantanée ou efficace constante, il est connu que l'augmentation du couple Cpl résistant appliqué au moteur se traduit, à vitesse de rotation constante, par une augmentation de la demande du moteur en courant électrique.

Il est ainsi connu que le premier paramètre de sortie que constitue la vitesse de rotation ω du moteur MOT est au moins lié au courant d'alimentation I, donc au premier paramètre d'entrée S(I) qui le reflète, par une première fonction de transfert G qui caractérise ce système et qu'il est possible d'établir.

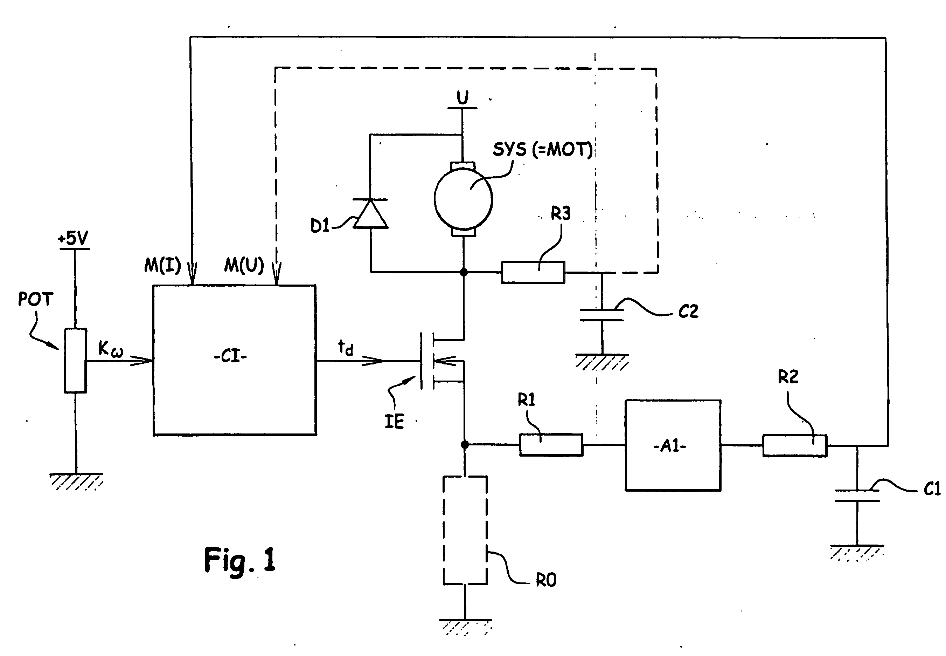

Dans le montage illustré à la figure 1, le moteur MOT est alimenté par une tension alternative U, redressée par une diode Dl, pendant des intervalles de temps définis par l'état passant d'un interrupteur électronique IE lui-même commandé par un circuit intégré CI, l'une des bornes du moteur MOT étant reliée à la masse par une résistance de puissance R0.

La tension aux bornes de la résistance de puissance R0 est filtrée par un filtre passe-bas, qui inclut par exemple deux résistances R1 et R2, un amplificateur A1, et un condensateur C1, et qui délivre au circuit intégré CI un signal de mesure M(I) représentatif du courant moyen ayant traversé la résistance de puissance R0 et donc aussi représentatif du courant moyen ayant traversé le moteur MOT.

Dans le cas où la tension U n'est pas suffisamment stable, le montage illustré à la figure 1 peut aussi comprendre un second filtre passe-bas, formé d'une résistance R3 et d'un condensateur C2, et délivrant au circuit intégré CI un signal de mesure M(U) représentatif d'une valeur moyenne de la tension d'alimentation du moteur MOT.

Le circuit intégré CI reçoit par ailleurs le signal de consigne Kω, qui est délivré par le potentiomètre POT et qui est destiné à fixer la-vitesse de rotation ω du moteur.

Sur chaque période T de la tension U, le circuit intégré CI place l'interrupteur électronique IE dans son état bloquant pendant un intervalle de temps t_{d}, et dans son état passant pendant un intervalle de temps T - t_{d}. Le courant d'alimentation I du moteur MOT est ainsi régulé en valeur moyenne par modulation cyclique.

Le problème que l'invention se propose de résoudre, et que cette figure 1 rend visible, consiste à commander le système SYS, en l'occurrence le moteur MOT, en fonction du signal de consigne Kω que doit suivre son premier paramètre de sortie, en ne disposant éventuellement que de la valeur mesurée M(I) du premier paramètre d'entrée S(I).

Pour ce faire, le procédé de l'invention comprend tout d'abord une phase de caractérisation du système SYS, suivie d'une phase de modélisation, ces deux phases s'inscrivant en amont de toute utilisation de ce système et étant donc préalables à la phase de régulation.

La phase de caractérisation consiste à déterminer expérimentalement, selon une méthodologie bien connue de l'homme de métier, au moins une première fonction de transfert inverse G⁻¹, qui lie le premier paramètre d'entrée S(I) au premier paramètre de sortie ω.

La phase de modélisation consiste à traduire cette première fonction de transfert inverse G⁻¹ au moyen d'un modèle de logique floue sous la forme d'un premier ensemble de domaines de valeurs X₀ à X₉ du premier paramètre de sortie ω, à chacun desquels est affectée une valeur spécifique Y₀ à Y₉ du premier paramètre d'entrée S(I).

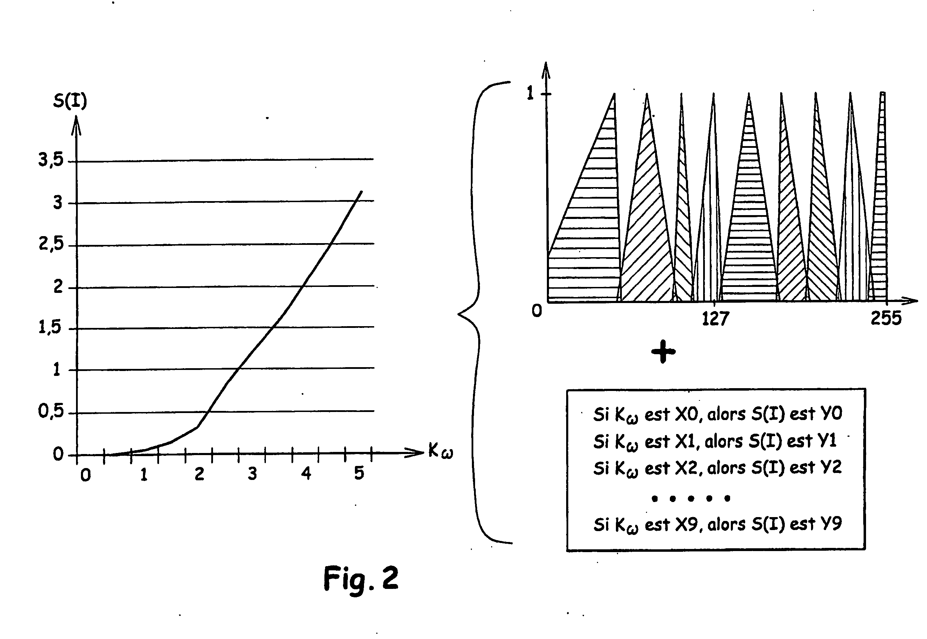

Cette traduction, symboliquement représentée sur la figure 2, peut notamment être réalisée au moyen d'un logiciel dénommé "AFM", que la Société STMICROELECTRONICS SA met à la libre disposition du public sur son site Internet.

Une fois réalisées les phases de caractérisation et de modélisation, le procédé de l'invention comprend de préférence une phase d'intégration, dans laquelle la première fonction de transfert inverse G⁻¹, qui a été traduite sous la forme du premier ensemble de domaines de valeurs X₀ à X₉, est mémorisée dans le circuit intégré CI.

Pour ce faire, le circuit CI est avantageusement doté de moyens dédiés de calcul en logique floue, et est par exemple constitué par le circuit de référence ST 52 E 440 G3, commercialisé par la Société STMICROELECTRONICS SA.

Toutes les phases préparatoires ayant été réalisées, la phase de régulation, qui constitue la phase opérationnelle du procédé de l'invention pour son application concrète, peut être mise en oeuvre.

Lors de cette phase de régulation, le circuit CI détermine à quel domaine de valeurs X₀ à X₉ du premier ensemble appartient le signal de consigne Kω qu'il reçoit.

Par application des règles du modèle mémorisé, dont la partie basse de la figure 2 donne un exemple, le circuit CI déduit de la valeur du signal de consigne Kω qu'il reçoit une valeur estimée S(I)e que doit prendre a priori le premier paramètre d'entrée S(I) pour assurer l'égalité recherchée entre le premier paramètre de sortie ω et le signal de consigne K_{ω}.

Enfin, le premier paramètre d'entrée S(I) est régulé en fonction de la différence ΔI entre la valeur estimée S(I)e et la valeur mesurée M(I) de ce premier paramètre d'entrée S(I), cette régulation prenant physiquement la forme d'une modulation de l'intervalle de temps t_{d} dans l'exemple illustré.

Jusqu'à présent, le premier paramètre de sortie que constitue la vitesse de rotation a été exclusivement considéré comme lié, par la première fonction de transfert G, au premier paramètre d'entrée S(I).

Il se peut cependant que le premier paramètre de sortie ω soit également lié à au moins un deuxième paramètre d'entrée S(U) par une deuxième fonction de transfert H du système.

C'est le cas dans l'exemple illustré, où la vitesse de rotation du moteur ω dépend aussi du paramètre d'entrée S(U) qui reflète la tension d'alimentation du moteur MOT.

Aussi longtemps que la tension d'alimentation U prend une valeur stable et connue, la régulation telle qu'exposée précédemment est totalement suffisante.

Dans le cas cependant où la tension d'alimentation U est instable, et où par conséquent le second paramètre d'entrée S(U) subit des variations qui influent sur la qualité de la régulation, la phase de caractérisation inclut de préférence la détermination expérimentale d'au moins une deuxième fonction de transfert inverse H⁻¹, qui lie ce deuxième paramètre d'entrée S(U) au premier paramètre de sortie ω.

Au cours de la phase de modélisation, cette deuxième fonction de transfert inverse H⁻¹ est traduite, comme la première fonction de transfert inverse G⁻¹, au moyen du modèle de logique floue, sous la forme d'un deuxième ensemble de domaines de valeurs du premier paramètre de sortie ω, à chacun desquels est affectée une valeur spécifique du deuxième paramètre d'entrée S(U).

Une fois traduite, cette deuxième fonction de transfert inverse H⁻¹ est avantageusement mémorisée dans le même circuit intégré CI que la première fonction de transfert inverse G⁻¹.

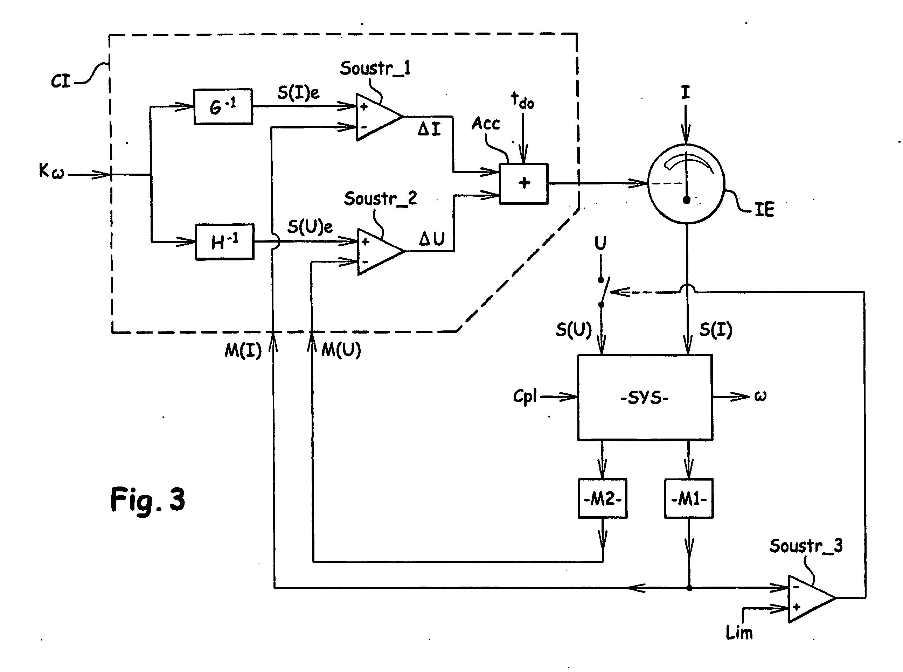

Le déroulement de la phase de régulation mettant globalement en oeuvre les deux fonctions de transfert inverses G⁻¹ et H⁻¹ est illustré de façon symbolique sur la figure 3.

Sur cette figure, M1 et M2 désignent les portions de circuit qui permettent respectivement l'obtention des valeurs mesurées M(I) et M(U) des premier et second paramètres d'entrée S(I) et S(U), tandis que Soustr_1, Soustr_2, et Soustr_3 désignent divers modules fonctionnels dont chacun permet de former la différence entre deux signaux ou grandeurs.

La différence ΔI entre la valeur estimée S(I)e et la valeur mesurée M(I) du premier paramètre d'entrée S(I), obtenue comme exposé précédemment et produite par le module Soustr_1, vient modifier dans un sens positif ou négatif le contenu d'un accumulateur algébrique Acc.

Cet accumulateur, initialement chargé d'une valeur t_{d0} choisie de façon aléatoire ou optimisée, et appliquée au démarrage du système constitué par le moteur MOT, délivre périodiquement un signal définissant l'intervalle de temps t_{d} pendant lequel le moteur n'est pas alimenté.

De même que le circuit intégré CI identifie à quel domaine de valeurs du premier ensemble appartient le signal de consigne Kω qu'il reçoit et en déduit une valeur estimée S(I)e que doit prendre a priori le premier paramètre d'entrée S(I), de même ce circuit identifie à quel domaine de valeurs du deuxième ensemble appartient le signal de consigne Kω qu'il reçoit et en déduit une valeur estimée S(U)e que doit prendre a priori le deuxième paramètre d'entrée S(U).

La différence ΔU entre la valeur estimée S(U)e et la valeur mesurée M(U) du deuxième paramètre d'entrée S(U), produite par le module Soustr_2, vient modifier dans un sens positif ou négatif le contenu de l'accumulateur algébrique Acc, et apporte donc sa contribution à la définition de l'intervalle de temps t_{d} pendant lequel le moteur MOT n'est pas alimenté.

Comme le montre la figure 3, le procédé de l'invention peut comprendre une procédure visant à protéger de toute surintensité le système constitué par le moteur MOT.

Pour ce faire, la mesure M(I) du courant d'alimentation est en permanence comparée à un seuil prédéterminé Lim dans un module Soustr_3, et l'alimentation du moteur est interrompue lorsque cette mesure M(I) dépasse le seuil prédéterminé Lim.

## Revendications

1. Procédé pour commander, au cours d'une phase de régulation et en fonction d'un signal de consigne (Kω), un système dynamique physique (SYS) appartenant à un type prédéterminé, soumis en fonctionnement à l'influence d'une pluralité de grandeurs physiques (I, U) représentées par des paramètres d'entrée (S(I), S(U)), et adoptant un comportement défini par au moins un premier paramètre physique de sortie (w) astreint à prendre une valeur (ω k) représentée par le signal de consigne (Kω), ce premier paramètre de sortie (ω) étant au moins lié à un premier (S(I)) des paramètres d'entrée par une première fonction de transfert (G) de ce système, **caractérisé en ce qu'**il comprend une phase de caractérisation, préalable à la phase de régulation, et dans laquelle au moins une première fonction de transfert inverse (G⁻¹), liant le premier paramètre d'entrée (S(I)) au premier paramètre de sortie (m) est déterminée expérimentalement, et une phase de modélisation, qui est postérieure à la phase de caractérisation et préalable à la phase de régulation, et dans laquelle la première fonction de transfert inverse (G⁻¹) est traduite au moyen d'un modèle de logique floue sous forme d'un premier ensemble de domaines de valeurs (X₀ à X₉) du premier paramètre de sortie (ω), à chacun desquels est affectée une valeur spécifique (Y₀ à Y₉) du premier paramètre d'entrée (S(I)), et **en ce que** la phase de régulation est mise en oeuvre en déterminant une appartenance du signal de consigne (Kω) à l'un des domaines de valeurs (X₀ à X₉) du premier ensemble, en déduisant de cette appartenance et du modèle de logique floue une valeur estimée (S(I)e) du premier paramètre d'entrée (S(I)) correspondant à l'égalité recherchée entre le premier paramètre de sortie (ω) et le signal de consigne (Kω), en produisant une valeur mesurée (M(I)) du premier paramètre d'entrée (S(I)), et en régulant le premier paramètre d'entrée (S(I)) en fonction d'une différence (Δ(I)) entre la valeur estimée (S(I)e) et la valeur mesurée (M(I)) de ce premier paramètre d'entrée (S(I)).

2. Procédé suivant la revendication 1, **caractérisé en ce que** le premier paramètre de sortie (ω) est également lié à au moins un deuxième (S(U)) des paramètres d'entrée par une deuxième fonction de transfert (H) du système, **en ce qu'**au moins une deuxième fonction de transfert inverse (H⁻¹), liant le deuxième paramètre d'entrée (S(U)) au premier paramètre de sortie (ω) est déterminée expérimentalement au cours de la phase de caractérisation, **en ce qu'**au moins la deuxième fonction de transfert inverse (H⁻¹) est traduite, au cours de la phase de modélisation, au moyen du modèle de logique floue, sous forme d'un deuxième ensemble de domaines de valeurs du premier paramètre de sortie (ω), à chacun desquels est affectée une valeur spécifique du deuxième paramètre d'entrée (S(U)), et **en ce que** la phase de régulation est mise en oeuvre en déterminant une appartenance du signal de consigne (Kω) à l'un des domaines de valeurs du deuxième ensemble, en déduisant de cette appartenance et du modèle de logique floue une valeur estimée (S(U)e) du deuxième paramètre d'entrée (S(U)) correspondant à l'égalité recherchée entre le premier paramètre de sortie et le signal de consigne, en produisant une valeur mesurée (M(U)) du deuxième paramètre d'entrée (S(U)), et en régulant le premier paramètre d'entrée (S(I)) en fonction d'une différence (Δ(U)) entre la valeur estimée (S(U)e) et la valeur mesurée (M(U)) du deuxième paramètre d'entrée (S(U)).

3. Procédé suivant l'une quelconque des revendications précédentes, **caractérisé en ce que** le système physique (SYS) est un dispositif consommateur d'énergie électrique alimenté par une tension d'alimentation (U) présentant une valeur nominale ou efficace au moins sensiblement constante, et **en ce que** le premier paramètre d'entrée (S(I)) représente un courant d'alimentation (I) de ce dispositif.

4. Procédé suivant la revendication 3, **caractérisé en ce que** le courant d'alimentation (I) du dispositif électrique (SYS) est régulé en valeur moyenne par modulation cyclique.

5. Procédé suivant l'une quelconque des revendications 3 et 4, **caractérisé en ce que** le deuxième paramètre d'entrée (S(U)) représente la tension d'alimentation (U) du dispositif électrique (SYS).

6. Procédé suivant l'une quelconque des revendications 3 à 5, **caractérisé en ce que** le système physique (SYS) est un moteur électrique (MOT).

7. Procédé suivant la revendication 6, **caractérisé en ce que** le premier paramètre de sortie (ω) est constitué par la vitesse de rotation du moteur (MOT).

8. Procédé suivant l'une quelconque des revendications 3 à 7, **caractérisé en ce qu'**il comprend une procédure de sécurité incluant une comparaison d'une mesure (M(I)) du courant d'alimentation à un seuil prédéterminé (Lim), et une interruption de l'alimentation du dispositif électrique (SYS) en cas de dépassement du seuil (Lim) par la mesure (M(I)) du courant d'alimentation.

9. Procédé suivant l'une quelconque des revendications précédentes, **caractérisé en ce qu'**il comprend une phase d'intégration, intermédiaire entre les phases de modélisation et de régulation, et dans laquelle la première fonction de transfert inverse (G⁻¹), traduite sous la forme du premier ensemble de domaines de valeurs (X₀ à X₉), est mémorisée dans un circuit intégré (CI) doté de moyens dédiés de calcul en logique floue.

10. Procédé suivant la revendication 9, **caractérisé en ce que**, dans la phase d'intégration, la deuxième fonction de transfert inverse (H⁻¹), traduite sous la forme du deuxième ensemble de domaines de valeurs, est mémorisée dans le même circuit intégré (CI).

## Patentansprüche

1. Verfahren, mit welchem im Verlauf einer Regulierungsphase und in Abhängigkeit von einem Sollwertsignal (Kω), ein physikalisches dynamisches System (SYS) gesteuert werden kann, das einer vorbestimmten Bauart zugehörig ist, die im Betrieb dem Einfluss einer Mehrzahl von physikalischer Größen (I, U) ausgesetzt ist, die durch Eingangsparameter (S(I), S(U)) repräsentiert werden, und das eine Verhaltensweise annimmt, die durch wenigstens einen ersten physikalischen Ausgangparameter (ω) definiert ist, der gezwungen ist, einen durch das Sollwertsignal (Kω) repräsentierten Wert (ωk)) anzunehmen, wobei dieser Parameter (ω) durch eine erste Übertragungsfunktion (G) des Systems wenigstens mit einem ersten (S(I)) der Eingangsparameter verknüpft ist, **dadurch gekennzeichnet, dass** dieses eine Charakterisierungsphase vor der Regulierungsphase aufweist und in dieser wenigstens eine inverse ersten Übertragungsfunktion (G⁻¹), welche den ersten Eingangsparameter (S(I)) mit dem ersten Ausgangsparameter (ω) verknüpft, experimentell bestimmt wird, und eine Modellierungsphase aufweist, die nach der Charakterisierungsphase und vor der Regulierungsphase liegt und in welcher die inverse erste Übertragungsfunktion (G⁻¹) mit Hilfe eines FUZZY-Modells in Form einer ersten Gruppe von Wertebereichen (X0 bis X9) des ersten Ausgangsparameters (ω) übersetzt wird, die jeweils einem spezifischen Wert (Y0 bis Y9) des ersten Eingangsparameters (S(I)) zugeordnet sind, und **dadurch**, dass die Regulierungsphase durchgeführt wird, indem ein Auftreten des Sollwertsignals (Kω) in einem der Wertebereiche (X0 bis X9) der ersten Gruppe bestimmt wird, indem aus diesem Auftreten und aus dem FUZZY-Modell ein Schätzwert (S(I))e) des ersten Eingangsparameters (S(I)) hergeleitet wird, der einer zwischen dem ersten Ausgangsparameter (ω) und dem Sollwertsignal (Kω) nachgesuchten Gleichheit entspricht, indem ein Messwert (M(I)) des ersten Eingangsparameters (S(I)) erzeugt wird und indem der erste Eingangsparameter (S(I)) in Abhängigkeit von einer Differenz (Δ(I)) zwischen dem geschätzten (S(I)e) und dem gemessenen (M(I)) Wert dieses ersten Eingangsparameters (S(I)) reguliert wird.

2. Verfahren nach Anspruch 1, **dadurch gekennzeichnet, dass** der erste Ausgangsparameter (ω) ebenso durch eine zweite Übertragungsfunktion (H) des Systems mit wenigstens einem zweiten (S(U)) der Eingangsparameter verknüpft wird, dass wenigstens eine inverse zweite Übertragungsfunktion (H⁻¹), welche den zweiten Eingangsparameter (S(U)) mit dem Ausgangsparameter (ω) verknüpft, experimentell im Verlauf der Charakterisierungsphase bestimmt wird, dass wenigstens die inverse zweite Übertragungsfunktion (H⁻¹) im Verlauf der Modellierungsphase mit Hilfe des FUZZY-Modells in Form einer zweiten Gruppe von Wertebereichen des ersten Ausgangsparameters (ω) übersetzt wird, denen jeweils ein spezifischer Wert des zweiten Eingangsparameter (S(U)) zugeordnet ist, und dass die Regulierungsphase ausgeführt wird, indem ein Auftreten des Sollwertsignals (Kω) in einem der Wertebereiche der zweiten Gruppe bestimmt wird, indem aus diesem Auftreten und aus dem FUZZY-Modell ein geschätzter Wert (S(U)e) des zweiten Eingangsparameters (S(U)) abgeleitet wird, der mit einer nachgesuchten Gleichheit zwischen dem ersten Ausgangsparameter und dem Sollwertsignal korrespondiert, indem ein Messwert (M(U)) des Eingangsparameters (S(U)) erzeugt wird und indem der erste Eingangsparameter (S(I)) in Abhängigkeit von einer Differenz (Δ(U)) zwischen dem Schätzwert (S(U)e) und dem Messwert (M(U)) des zweiten Eingangsparameters (S(U)) reguliert wird.

3. Verfahren nach einem der vorstehenden Ansprüche, **dadurch gekennzeichnet, dass** das physikalische System (SYS) eine Verbrauchseinrichtung elektrischer Energie ist, die durch eine Versorgungsspannung (U) versorgt wird, welche einen wenigstens im Wesentlichen konstanten Nenn- oder Effektivwert aufweist, und dass der erste Eingangsparameter (S(I)) einen Versorgungsstrom (I) dieser Einrichtung darstellt.

4. Verfahren nach Anspruch 3, **dadurch gekennzeichnet, dass** der Versorgungsstrom (I) der elektrischen Einrichtung (SYS) durch zyklische Modulation auf den Mittelwert eingeregelt wird.

5. Verfahren nach einem der Ansprüche 3 und 4, **dadurch gekennzeichnet, dass** der zweite Eingangsparameter (S(U)) die Versorgungsspannung (U) der elektrischen Einrichtung (SYS) darstellt.

6. Verfahren nach einem der Ansprüche 3 bis 5, **dadurch gekennzeichnet, dass** das physikalische System (SYS) ein elektrischer Motor (MOT) ist.

7. Verfahren nach Anspruch 6, **dadurch gekennzeichnet, dass** der erste Ausgangsparameter (ω) durch die Drehzahl des Motors (MOT) bestimmt wird.

8. Verfahren nach einem der Ansprüche 3 bis 7, **dadurch gekennzeichnet, dass** dieses eine Sicherheitsprozedur umfasst, welche einen Vergleich einer Messgröße (M(I)) des Versorgungsstromes mit einem vorbestimmten Schwellenwert (Lim) und eine Unterbrechung der Versorgung der elektrischen Einrichtung. (SYS) im Falle eines Überschreitens des Schwellenwertes (Lim) durch die Messgröße (M(I)) des Versorgungsstromes beinhaltet.

9. Verfahren nach einem der vorstehenden Ansprüche, **dadurch gekennzeichnet, dass** dieses eine Integrationsphase umfasst, die zwischen der Modellierungs- und der Regulierungsphase liegt, und in welcher die inverse erste Übertragungsfunktion (G⁻¹), die in Form der ersten Gruppe von Wertebereichen (X0 bis X9) übersetzt ist, in einem integrierten Schaltkreis (CI) gespeichert wird, der mit Mitteln versehen ist, die für eine FUZZY-Berechnung ausgelegt sind.

10. Verfahren nach Anspruch 9, **dadurch gekennzeichnet, dass** in der Integrationsphase die inverse zweite Übertragungsfunktion (H-1), die in Form der zweiten Gruppe von Wertebereichen übersetzt ist, in demselben integrierten Schaltkreis (CI) gespeichert wird.

## Claims

1. Method for controlling, during a regulation phase and as a function of a setpoint signal (Kω), a physical dynamic system (SYS) of a given type, which is subject, during operation, to the influence of a plurality of physical quantities (I, U) represented by input parameters (S(I), S(U)), and which adopts a behaviour defined by at least a first output physical parameter (ω) that is constrained to take a value (ωk) represented by the setpoint signal (Kω), this first output parameter (ω) being at least associated with a first one (S(I)) of the input parameters through a first transfer function (G) of this system, **characterized in that** it comprises a characterization phase, prior to the regulation phase, and in which at least a first inverse transfer function (G⁻¹), linking the first input parameter (S(I)) to the first output parameter (ω), is determined experimentally, and a modelling phase, following the characterization phase and preceding the regulation phase, and in which the first inverse transfer function (G⁻¹) is translated by means of a fuzzy logic model into the form of a first set of domains of values (X₀ to X₉) of the first output parameter (ω), to each of which a specific value (Y₀ to Y₉) of the first input parameter (S(I)) is allocated, and **in that** the regulation phase is implemented by determining to which of the domains of values (X₀ to X₉) of the first set the setpoint signal (Kω) belongs, by deducing from this association and from the fuzzy logic model an estimated value (S(I)e) of the first input parameter (S(I)) corresponding to the desired equality between the first output parameter (ω) and the setpoint signal (Kω), by producing a measured value (M(I)) of the first input parameter (S(I)), and by adjusting the first input parameter (S(I)) as a function of a difference (Δ(I)) between the estimated value (S(I)e) and the measured value (M(I)) of this first input parameter (S(I)).

2. Method according to Claim 1, **characterized in that** the first output parameter (ω) is also associated with at least a second one (S(U)) of the input parameters through a second transfer function (H) of the system, **in that** at least a second inverse transfer function (H⁻¹), linking the second input parameter (S(U)) to the first output parameter (ω) is determined experimentally during the characterization phase, **in that** at least the second inverse transfer function (H⁻¹) is translated, during the modelling phase, by means of the fuzzy logic model, into the form of a second set of domains of values of the first output parameter (ω), to each of which is allocated a specific value of the second input parameter (S (U)), and **in that** the regulation phase is implemented by determining to which of the domains of values of the second set the setpoint signal (Kω) belongs, by deducing from this association and from the fuzzy logic model an estimated value (S(U)e) of the second input parameter (S(U)) corresponding to the desired equality between the first output parameter and the setpoint signal, by producing a measured value (M(U)) of the second input parameter (S(U)), and by adjusting the first input parameter S(I)) as a function of a difference (Δ(U)) between the estimated value (S(U)e) and the measured value (M(U)) of the second input parameter (S(U)).

3. Method according to any one of the preceding claims, **characterized in that** the physical system (SYS) is a device consuming electrical power supplied by a power supply voltage (U) exhibiting a nominal or rms value that is at least substantially constant, and **in that** the first input parameter (S(I)) represents a power supply current (I) of this device.

4. Method according to Claim 3, **characterized in that** the power supply current (I) of the electrical device (SYS) has its mean value regulated by periodic modulation.

5. Method according to either one of Claims 3 and 4, **characterized in that** the second input parameter (S(U)) represents the power supply voltage (U) of the electrical device (SYS).

6. Method according to any one of Claims 3 to 5, **characterized in that** the physical system (SYS) is an electric motor (MOT).

7. Method according to Claim 6, **characterized in that** the first output parameter (ω) is formed by the rotation speed of the motor (MOT).

8. Method according to any one of Claims 3 to 7, **characterized in that** it comprises a safety procedure including a comparison of a measurement (M(I)) of the power supply current at a predetermined threshold (Lim) and an interruption of the power supply to the electrical device (SYS) in the case where the threshold (Lim) is exceeded by the measurement (M(I)) of the power supply current.

9. Method according to any one of the preceding claims, **characterized in that** it comprises an integration phase, that is intermediate between the modelling and regulation phases, and in which the first inverse transfer function (G⁻¹), translated into the form of the first set of the domains of values (X₀ to X₉), is stored in an integrated circuit (CI) having dedicated means for calculating in fuzzy logic mode.

10. Method according to Claim 9, **characterized in that**, in the integration phase, the second inverse transfer function (H⁻¹), translated into the form of the second set of domains of values, is stored in the same integrated circuit (CI).
